# EUROPÄISCHE PATENTSCHRIFT

(11) **EP 2 842 222 B1**
(45) Veröffentlichungstag und Bekanntmachung des Hinweises auf die Patenterteilung: **13.12.2017**
(21) Anmeldenummer: 13717267.2
(22) Anmeldetag: 16.04.2013
(51) Int. Cl.: H02M 7/10, H02J 7/02

(54) **AUSGANGSSTUFE EINES LADEGERÄTES**
OUTPUT STAGE OF A CHARGING DEVICE
ÉTAGE DE SORTIE D'UN CHARGEUR

(30) Priorität: 27.04.2012 AT 501502012
(43) Veröffentlichungstag der Anmeldung: 04.03.2015
(73) Patentinhaber: Siemens Aktiengesellschaft, 80333 München (DE)
(72) Erfinder: TRNKA, Alexander, 2201 Gerasdorf bei Wien (AT)
(74) Vertreter: Maier, Daniel Oliver
(86) Internationale Anmeldenummer: PCT/EP2013/057930
(87) Internationale Veröffentlichungsnummer: WO 2013/160157

(56) Entgegenhaltungen:
- EP-A1- 2 437 386
- EP-A2- 1 047 172

## Beschreibung

### Technisches Gebiet

Die Erfindung betrifft eine Ausgangsstufe eines Ladegerätes, umfassend zumindest
- eine erste Sekundärwicklung eines Transformators,
- einen ersten Gleichrichter, der an die erste Sekundärwicklung angeschlossen ist,
- einen Tiefsetzsteller, der an den Ausgang des ersten Gleichrichters angeschlossen ist, wobei an einem ersten Ausgangskondensator eine erste Ausgangsspannung abgreifbar ist.

Ein Ladegerät umfasst in der Regel eine Eingangsstufe, in welche die Speisespannung als Wechselspannung, etwa aus dem Wechselstromnetz oder einer Halbleiterbrücke, eingespeist und einer Primärwicklung eines Transformators zugeführt wird. Die Ausgangsstufe eines Ladegeräts umfasst die Sekundärwicklung des Transformators, einen Gleichrichter und einen Tiefsetzsteller. Solche Ladegeräte kommen zum Beispiel in oder für Batterien eines Elektrofahrzeugs zum Einsatz.

Ein Tiefsetzsteller (Abwärtswandler) weist allgemein einen Schalter auf, eine Diode, einen Eingangs- und einen Ausgangskondensator und eine Induktivität, etwa eine Speicherdrossel, als Zwischenspeicher für die Energie. Als Schalter kommt ein Halbleiterschalter, meist ein Transistor, zum Einsatz, der einen Leistungshalbleiter enthält. Am Ausgangskondensator ist die Ausgangsspannung abgreifbar, die einem Verbraucher oder Speicher, etwa eben einer Batterie, zugeführt wird.

### Stand der Technik

Weil die Schaltgeschwindigkeiten der als Halbleiterschalter im Tiefsetzsteller verwendeten Transistoren (z.B. IGBT, FET, SIC-FET) immer größer werden, entstehen entsprechend große Schaltverluste im Transistor. Grundsätzlich gilt: je größer die Sperrspannung des Transistors ist, desto größer sind die Schaltverluste. Für die Induktivität des Tiefsetzstellers gilt: je größer die Spannung an der Induktivität, desto größer die Welligkeit (die sogenannten "Stromrippel") der vom Tiefsetzsteller erzeugten Spannung.

Eine Ausgangsstufe einer Stromversorgung ist aus der EP 2 437 386 A1 bekannt. Hier sind mehrere geregelte Spannungen in Serie geschaltet, um eine hohe geregelte Ausgangsspannung zur Verfügung zu stellen.

### Darstellung der Erfindung

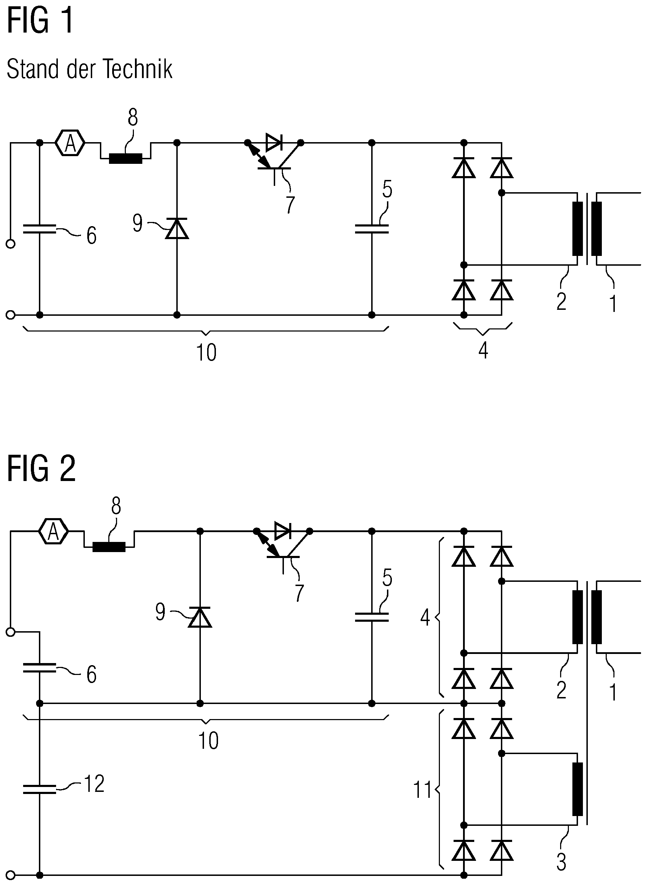

Es ist eine Aufgabe der vorliegenden Erfindung, eine Ausgangsstufe eines Ladegeräts zur Verfügung zu stellen, welche die Zwischenkreisspannung für den getakteten Teil der Schaltung (besonders die Spannung an den Halbleiterschaltern des Tiefsetzstellers) verkleinert, also für den Schaltungsteil, welcher die Induktivität und den Halbleiterschalter (z.B. den Transistor) umfasst. Dies betrifft den Schaltungsteil, der zwischen den beiden Kondensatoren in Fig. 1 angeordnet ist. Dadurch könnten die Schaltverluste im Schalter des Tiefsetzstellers verkleinert und die Abmessungen der Induktivität reduziert werden.

Diese Aufgabe wird durch eine Ausgangsstufe mit den Merkmalen des Patentanspruchs 1 gelöst. Vorteilhafte Ausgestaltungen der Erfindung sind in den jeweiligen abhängigen Ansprüchen definiert.

Gemäß Anspruch 1 ist vorgesehen, dass die Ausgangsstufe eine ungeregelte Grundspannung zur Verfügung stellt, indem der Transformator der Ausgangsstufe eine zweite Sekundärwicklung aufweist, an die ein zweiter Gleichrichter samt zweitem Ausgangskondensator angeschlossen ist, wobei erster und zweiter Ausgangskondensator in Serie geschaltet sind.

Die Ausgangsspannung für den zu ladenden Verbraucher kann der Serienschaltung der beiden Ausgangskondensatoren entnommen werden. Dadurch kann die Spannung am ersten Ausgangskondensator und damit im Tiefsetzsteller - im Vergleich zu Ausgangsstufen mit nur einem Ausgangskondensator - verringert werden, um die gleiche Spannung für den Verbraucher zur Verfügung zu stellen.

Eine mögliche Ausführungsform der Erfindung bezieht sich darauf, dass mehrere kaskadierte Tiefsetzsteller vorgesehen sind. Diese kaskadierten Tiefsetzsteller werden in bekannter Weise gegenphasig angesteuert. Dadurch wird eine deutliche Reduktion des Rippelstromes erreicht.

Wenn erste und zweite Sekundärwicklung so ausgebildet sind, dass die zweite Sekundärwicklung weniger Spannung liefert als die erste Sekundärwicklung, dann ist gewährleistet, dass durch die zweite Sekundärwicklung und den zweiten Gleichrichter eine ungeregelte Grundspannung zur Verfügung gestellt wird, die kleiner ist als die geregelte Spannung, die durch die erste Sekundärwicklung, den ersten Gleichrichter und den Tiefsetzsteller erzeugt wird. Das Verhältnis der Wicklungen und damit der Spannungen der ersten und der zweiten Sekundärwicklung kann bei gleicher Bauweise etwa so gewählt werden, dass die zweite Sekundärwicklung weniger Wicklungen aufweist als die erste Sekundärwicklung.

Von Vorteil ist, wenn das Verhältnis der Spannungen der ersten und zweiten Sekundärwicklung auf den zu ladenden Speicher abgestimmt sind. Dazu kann vorgesehen werden, dass die zweite Sekundärwicklung so ausgebildet ist, dass diese eine Grundspannung zur Verfügung stellt, die einer kleinsten zulässigen Spannung des zu ladenden Speichers entspricht und die erste Sekundärwicklung eine Zusatzspannung zur Verfügung stellt, welche die Grundspannung auf eine für den zu ladenden Speicher gewünschte Spannung ergänzt. Der zu ladende Speicher kann etwa eine Batterie sein, wie die Batterie eines Elektrofahrzeugs.

Entsprechend ist auch eine Kombination einer Ausgangsstufe eines Ladegerätes und eines Speichers von der Erfindung umfasst, wobei der Speicher so an die erfindungsgemäße Ausgangsstufe angeschlossen ist, dass er die Summe der Spannungen der beiden Ausgangskondensatoren abgreift.

Aufgrund der erfindungsgemäßen Ausführung der Ausgangsstufe können die Sperrspannung der Transistoren und der Dioden reduziert werden, wodurch weniger Schaltverluste auftreten. Und es kann die Abmessungen der Induktivität des Tiefsetzstellers (der Tiefsetzstellerdrossel) bei gleichbleibender Schaltfrequenz reduziert werden.

### Kurzbeschreibung der Figuren

Zur weiteren Erläuterung der Erfindung wird im nachfolgenden Teil der Beschreibung auf die schematischen Figuren Bezug genommen, aus der weitere vorteilhafte Ausgestaltungen, Einzelheiten und Weiterbildungen der Erfindung zu entnehmen sind. Es zeigen:
Figur 1 eine Ausgangsstufe nach dem Stand der Technik mit einem Tiefsetzsteller,
Figur 2 eine erfindungsgemäße Ausgangsstufe mit einem Tiefsetzsteller,
Figur 3 eine Ausgangsstufe nach dem Stand der Technik mit zwei kaskadierten Tiefsetzstellern,
Figur 4 eine erfindungsgemäße Ausgangsstufe mit zwei kaskadierten Tiefsetzstellern.

### Ausführung der Erfindung

In Fig. 1 ist eine Ausgangsstufe eines Ladegeräts gemäß dem Stand der Technik dargestellt. Sie umfasst die erste und hier einzige Sekundärwicklung 2 eines Transformators, von dem auch die Primärwicklung 1 eingezeichnet ist. Die Sekundärwicklung 2 ist an den ersten und hier einzigen Gleichrichter 4 angeschlossen, der den Tiefsetzsteller 10 mit Spannung versorgt. Dieser besteht aus einem Eingangskondensator 5, einem Ausgangskondensator 6, einem Transistor 7, einer Induktivität 8 und einer Diode 9. Der Ausgangskondensator 6 stellt die Ausgangsspannung an den Klemmen ganz links zur Verfügung, die für das Laden eines Speichers verwendet wird.

Erfindungsgemäß wird die Schaltung aus Fig. 1 nun um eine zweite Sekundärwicklung 3 des Transformators sowie um einen zweiten Gleichrichter 11 ergänzt, der über einen zweiten Ausgangskondensator 12 ebenfalls einen Teil der gesamten Ausgangsspannung zur Verfügung stellt. Die gesamte Ausgangsspannung setzt sich aus der Summe der Ausgangsspannungen vom Ausgangskondensator 6 des Tiefsetzstellers 10 sowie vom zweiten Ausgangskondensator 12 zusammen.

Wenn etwa der zu ladende Speicher eine Batterie ist und für diese eine minimale Batteriespannung von 200 V erforderlich ist, so ist es nicht notwendig, die gesamte Ausgangsspannung unter 200 V zu regeln. Deshalb wird die zweite Sekundärwicklung 3 so dimensioniert, dass am zweiten Ausgangskondensator 12 eine ungeregelte Grundspannung von 200 V anliegt, während die erste Sekundärwicklung so dimensioniert ist, dass mit dem Tiefsetzsteller 10 nur ein Anteil von 300 V effektiv geregelt werden muss. Insgesamt wird also der Batterie dann eine gesamte Ausgangsspannung von 500 V zur Verfügung gestellt.

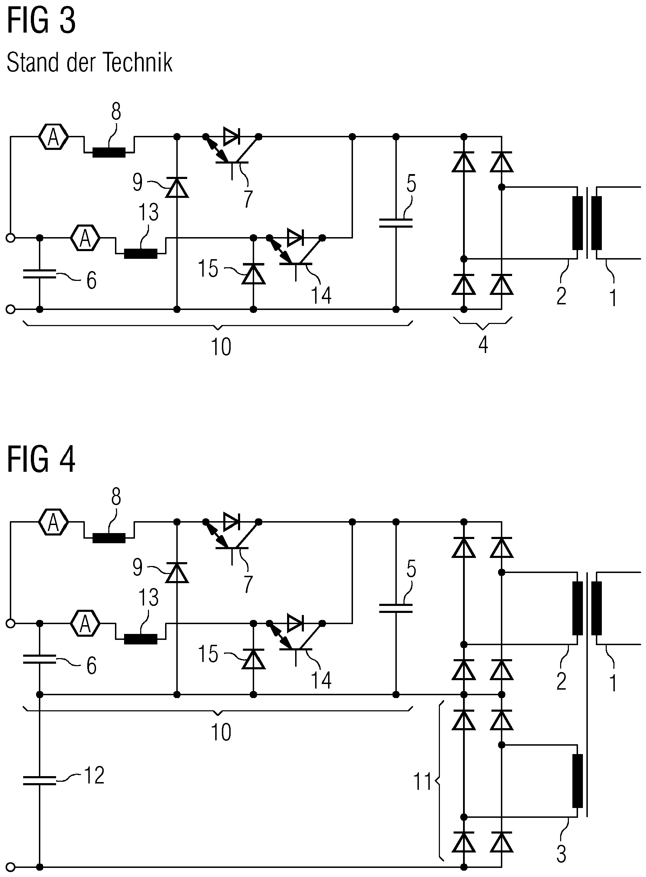

In Fig. 3 ist eine weitere Ausgangsstufe gemäß dem Stand der Technik dargestellt, die gemäß Fig. 4 verbessert werden kann.

Fig. 3 unterscheidet sich von Fig. 1 dadurch, dass ein weiterer Tiefsetzsteller vorgesehen ist, der zum Tiefsetzsteller 10 aus Fig. 1 kaskadiert angeordnet ist und eine weitere Induktivität 13, einen weiteren Transistor 14 und eine weitere Diode 15 umfasst. Der weitere Tiefsetzsteller teilt sich mit dem Tiefsetzsteller 10 den Eingangskondensator 5 und den Ausgangskondensator 6.

Diese Schaltung wird gemäß Fig. 4 analog zu Fig. 2 um eine zweite Sekundärwicklung 3 des Transformators sowie um einen zweiten Gleichrichter 11 und einen zweiten Ausgangskondensator 12 ergänzt.

Grundsätzlich ist die erfindungsgemäße Schaltung - für andere Zwecke als für Ladegeräte - auch mit Hochsetzstellern denkbar, indem also die Tiefsetzsteller durch Hochsetzsteller ersetzt werden.

### Bezugszeichenliste:

- 1: Primärwicklung des Transformators
- 2: erste Sekundärwicklung des Transformators
- 3: zweite Sekundärwicklung des Transformators#
- 4: erster Gleichrichter
- 5: Eingangskondensator des Tiefsetzstellers
- 6: erster Ausgangskondensator des Tiefsetzstellers
- 7: Transistor
- 8: Induktivität
- 9: Diode
- 10: Tiefsetzsteller
- 11: zweiter Gleichrichter
- 12: zweiter Ausgangskondensator
- 13: weitere Induktivität
- 14: weiterer Transistor
- 15: weitere Diode

## Patentansprüche

1. Ausgangsstufe eines Ladegerätes, umfassend zumindest
- eine erste Sekundärwicklung (2) eines Transformators,
- einen ersten Gleichrichter (4), der an die erste Sekundärwicklung (2) angeschlossen ist,
- einen Tiefsetzsteller (10), der an den Ausgang des ersten Gleichrichters (4) angeschlossen ist und einen ersten Ausgangskondensator (6) aufweist, **dadurch gekennzeichnet, dass** die Ausgangsstufe eine ungeregelte Grundspannung zur Verfügung stellt indem der Transformator eine zweite Sekundärwicklung (3) aufweist, an die ein zweiter Gleichrichter (11) samt zweitem Ausgangskondensator (12) angeschlossen ist, wobei erster und zweiter Ausgangskondensator in Serie geschaltet sind.

2. Ausgangsstufe nach Anspruch 1, **dadurch gekennzeichnet, dass** mehrere kaskadierte Tiefsetzsteller (10; 13, 14, 15) vorgesehen sind.

3. Ausgangsstufe nach Anspruch 1 oder 2, **dadurch gekennzeichnet, dass** erste und zweite Sekundärwicklung so ausgebildet sind, dass die zweite Sekundärwicklung (3) weniger Spannung liefert als die erste Sekundärwicklung (2) .

4. Ausgangsstufe nach einem der Ansprüche 1 bis 3, **dadurch gekennzeichnet, dass** die zweite Sekundärwicklung (3) so ausgebildet ist, dass diese eine Grundspannung zur Verfügung stellt, die einer kleinsten zulässigen Spannung des zu ladenden Speichers entspricht und die erste Sekundärwicklung (2) eine Zusatzspannung zur Verfügung stellt, welche die Grundspannung auf eine für den zu ladenden Speicher gewünschte Spannung ergänzt.

5. Ausgangsstufe eines Ladegerätes mit Speicher, wobei die Ausgangsstufe nach einem der Ansprüche 1 bis 4 ausgebildet ist und der Speicher so an die Ausgangsstufe angeschlossen ist, dass er die Summe der Spannungen der beiden Ausgangskondensatoren (6, 12) abgreift.

## Claims

1. Output stage of a charging device, comprising at least
- a first secondary winding (2) of a transformer,
- a first rectifier (4), which is connected to the first secondary winding (2),
- a step-down converter (10), which is connected to the output of the first rectifier (4) and has a first output capacitor (6), **characterised in that** the output stage provides an unregulated basic voltage by the transformer having a second secondary winding (3), to which a second rectifier (11) along with a second output capacitor (12) is connected, wherein the first and secondary output capacitor are connected in series.

2. Output stage according to claim 1, **characterised in that** a number of cascaded step-down converters (10; 13, 14, 15) are provided.

3. Output stage according to claim 1 or 2, **characterised in that** the first and second secondary winding are embodied so that the second secondary winding (3) delivers less voltage than the first secondary winding (2).

4. Output stage according to one of claims 1 to 3, **characterised in that** the second secondary winding (3) is embodied so that said winding makes available a basic voltage which corresponds to a smallest permissible voltage of the storage to be charged and the first secondary winding (2) makes available an additional voltage which expands the basic voltage to a desired voltage for the storage to be charged.

5. Output stage of a charging device with storage, wherein the output stage is embodied according to one of claims 1 to 4 and the storage is connected to the output stage so that it taps off the sum of the voltages of the two output capacitors (6, 12).

## Revendications

1. Étage de sortie d'un chargeur, comprenant au moins :
- un premier enroulement secondaire (2) d'un transformateur,
- un premier redresseur (4) raccordé au premier enroulement secondaire (2),
- un abaisseur de tension (10) raccordé à la sortie du premier redresseur (4) et comportant un premier condensateur de sortie (6),
**caractérisé en ce que** l'étage de sortie fournit une tension de base non réglée du fait que le transformateur comporte un deuxième enroulement secondaire (3) auquel est raccordé un deuxième redresseur (11) avec un deuxième condensateur de sortie (12), les premier et deuxième condensateurs de sortie étant montés en série.

2. Étage de sortie selon la revendication 1, **caractérisé en ce que** plusieurs abaisseurs de tension en cascade (10; 13, 14, 15) sont prévus.

3. Étage de sortie selon la revendication 1 ou 2, **caractérisé en ce que** les premier et deuxième enroulements secondaires sont conçus de telle sorte que le deuxième enroulement secondaire (3) fournit moins de tension que le premier enroulement secondaire (2).

4. Étage de sortie selon l'une des revendications 1 à 3, **caractérisé en ce que** le deuxième enroulement secondaire (3) est conçu de manière à fournir une tension de base qui correspond à une tension minimale autorisée de l'accumulateur à charger et **en ce que** le premier enroulement secondaire (2) fournit une tension supplémentaire qui porte la tension de base à une tension souhaitée pour l'accumulateur à charger.

5. Étage de sortie d'un chargeur comportant un accumulateur, l'étage de sortie étant réalisé selon l'une des revendications 1 à 4 et l'accumulateur étant raccordé à l'étage de sortie de manière à prélever la somme des tensions des deux condensateurs de sortie (6, 12) .
